# EUROPEAN PATENT APPLICATION

(11) **EP 2 474 349 A1**
(43) Date of publication of application: **11.07.2012**
(21) Application number: 10806411.4
(22) Date of filing: 02.08.2010
(51) Int. Cl.: B01D 53/62, C01B 31/20

(54) **METHOD FOR PROCESSING EXHAUST GAS OF CO2 COLLECTOR**

(30) Priority: 06.08.2009 JP 2009183352
(71) Applicant: Babcock-Hitachi Kabushiki Kaisha, Chiyoda-ku Tokyo 101-0021 (JP)
(72) Inventor: KATO Yasuyoshi, Kure-shi Hiroshima 737-0029 (JP); FUJISAWA Masatoshi, Kure-shi Hiroshima 737-0029 (JP)
(74) Representative: Jenkins, Peter David
(86) International application number: PCT/JP2010/063009
(87) International publication number: WO 2011/016412

(57) **Abstract**

Provided is a method capable of removing a low concentration of amines contained in an exhaust gas that is discharged from a CO₂ recovery process, at low temperature with high efficiency.

A method of treating an exhaust gas containing carbon dioxide, the method including absorbing and removing CO₂ by bringing an exhaust gas containing carbon dioxide (CO₂) and nitrogen oxides, into contact with a CO₂ absorbent liquid containing amines, subsequently bringing the resultant into contact with a catalyst comprising titanium oxide and an oxide of vanadium (V), or from titanium oxide, an oxide of vanadium (V) and an oxide of molybdenum (Mo) or tungsten (W), at a temperature of 130°C to 250°C, and thereby oxidizing and removing the amines.

## Description

### TECHNICAL FIELD

The present invention relates to a method of absorbing carbon dioxide (CO₂) in an exhaust gas with an absorbent liquid containing an amine, and then removing the amine contained in the exhaust gas with high efficiency at low temperature.

### BACKGROUND ART

Global warming due to the greenhouse effects of carbon dioxide (CO₂) has become a problem, and a cutback of the discharge amount is now an urgent issue. Particularly, the amount of CO₂ generation from thermal power generation facilities occupies about 1/3 of the total amount, and intensive research is being conducted on the enhancement of combustion efficiency in high efficiency boilers as well as on the methods of recovering and isolating CO₂ from the exhaust gas. Among those technologies, a method of recovering CO₂ by absorbing CO₂ from an exhaust gas using various absorbent liquids is advantageous in that the method can be applied to newly-built boilers as well as existing boilers, and therefore, the method is expected to constitute the mainstream of the CO₂ recovery technology (Patent Document 1).

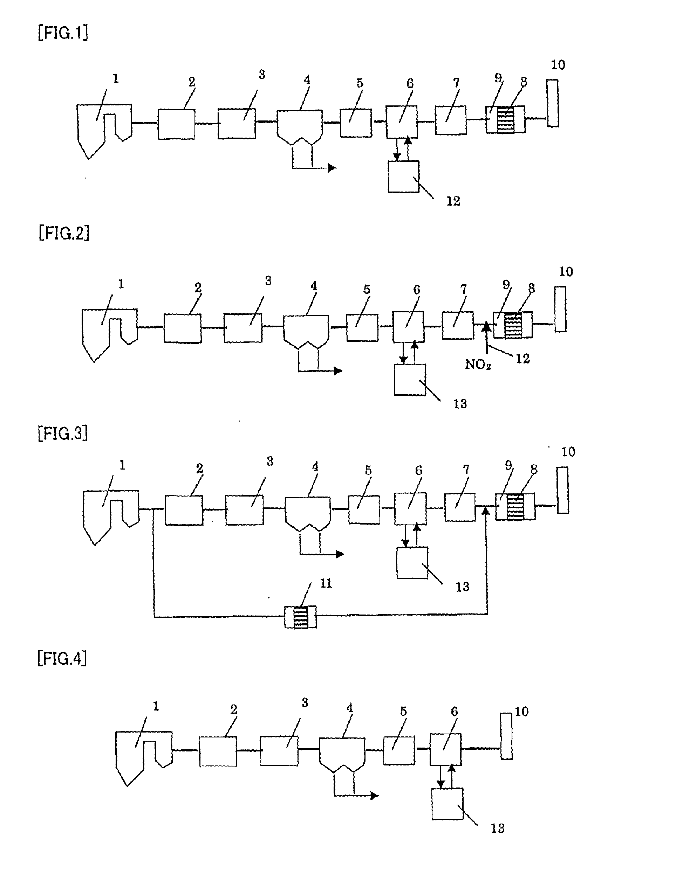

FIG. 4 is an explanatory diagram for a conventional exhaust gas treating apparatus that removes and recovers CO₂ from an exhaust gas. The exhaust gas from a boiler 1 passes through a denitration apparatus 2, an air preheater 3, an electrostatic precipitator 4 and a desulfurization apparatus 5, and then the exhaust gas is brought into contact with an absorbent liquid containing an amine (for example, an aqueous solution of an alkanolamine) in a CO₂ absorption column 6, so that CO₂ contained in the exhaust gas is removed. The liquid that has absorbed CO₂ is introduced into a CO₂ stripping column 13 to release CO₂ gas by heating, and then the liquid is returned to the absorption column 6 to be used again for the absorption. The exhaust gas having CO₂ removed therefrom is released to the outside through a smokestack 10. As such, the CO₂ recovery method shown in FIG. 4 has an excellent advantage that the method can be operated by simple absorption and regeneration operations using an aqueous solution of a simple compound (an amine) as a CO₂ absorbent liquid, and thus early practicalization of the method is anticipated.

However, in the method of FIG. 4, the gas treated during the course of CO₂ absorption operation comes to include amines at a proportion corresponding to the equilibrium vapor pressure, but the method does not take into consideration the problem that the amines are directly released to the atmosphere.

Since the vapor pressure of amines is low, the concentration of the amines that are contained in the exhaust gas and discharged is known to be low. However, not a few of the amines have a risk of oncogenicity, and it is not desirable to have the amines directly released to the atmosphere.

Furthermore, the CO₂ recovery apparatus in FIG. 4 is intended to reduce the discharge amount of CO₂, and the methods of removing amines in an exhaust gas by combusting the amines at high temperature or adsorbing and removing the amines using a large amount of an absorbent as described above, lead to an increase in the discharge amount of CO₂, which can be hardly said to be desirable (Patent Document 2).

Patent Document 1: Japanese Patent Application National Publication (Laid-Open) No. 2006-527153
Patent Document 2: Japanese Patent Application Laid-Open No. 2004-314003

### DISCLOSURE OF THE INVENTION

### PROBLEMS TO BE SOLVED BY THE INVENTION

It is an object of the present invention to provide a method capable of removing, at low temperature with high efficiency, a low concentration of amines contained in an exhaust gas discharged from the CO₂ absorption process, without requiring special equipment.

### MEANS FOR SOLVING THE PROBLEMS

For the removal of low-concentration organic matters in the exhaust gases, methods of performing an oxidation treatment using a catalyst which utilizes a noble metal are generally known, but since noble metals strongly adsorb at low temperature carbon monoxide (CO), which is an intermediate oxidation product, and are thereby poisoned, the noble metals are inappropriate for treatments at a temperature starting from a low temperature.

The inventors of the present invention searched for a catalytic component that is difficult to be poisoned by CO, and as a result, the inventors found that when a catalyst comprising titanium oxide and the oxide of vanadium (V), or titanium oxide, the oxide of vanadium (V) and the oxide of molybdenum (Mo) or tungsten (W) is used, poisoning by CO is difficult to occur, and the amines in an exhaust gas can be efficiently removed at low temperature. Thus, the inventors completed the invention.

The invention claimed in the present application is as follows.
(1) A method of treating an exhaust gas containing carbon dioxide, including absorbing and removing carbon dioxide (CO₂) by bringing an exhaust gas containing CO₂ and nitrogen oxides into contact with a CO₂ absorbent liquid containing an amine, and then bringing the resultant into contact with a catalyst comprising titanium oxide and an oxide of vanadium (V), or titanium oxide, an oxide of vanadium (V) and an oxide of molybdenum (Mo) or tungsten (W) at a temperature of 130°C to 250°C.
(2) The method of treating an exhaust gas according to item (1), wherein after the absorbing and removing CO₂, nitrogen dioxide is injected into the exhaust gas prior to the contact with the catalyst.
(3) The method of treating an exhaust gas according to item (2), wherein the nitrogen dioxide is produced by bringing a portion of the exhaust gas containing nitrogen oxides into contact with an oxidation catalyst.

The catalyst used in the present invention does not use any noble metal that is poisoned by CO, and therefore, the catalyst exhibits high activity even at a temperature starting from as low as 120°C, thus being capable of purification of exhaust gases containing amines at low temperature. In addition to this, the inventors also found that when nitrogen dioxide (NO₂) is present in the exhaust gas after the removal of CO₂, oxidative decomposition of amines at low temperature is accelerated. Therefore, by further blowing in a trace amount of NO₂ from the upper reach of the catalyst bed, an exhaust gas treatment can be realized with high efficiency at lower temperatures. Furthermore, when a product obtained by oxidizing NO in the exhaust gas obtainable by by-passing a portion of the exhaust gas prior to the denitration treatment, into NO₂, is used as the NO₂ to be blown, the necessity of providing a new NO₂ injection facility can be eliminated.

### EFFECTS OF THE INVENTION

According to the present invention, the amines in an amine-containing exhaust gas generated from a CO₂ recovery apparatus can be decomposed at a very low temperature, for example, as low as 130°C, and the release of amines to the atmosphere through the smokestack can be prevented.

### BRIEF DESCRIPTION OF THE DRAWINGS

FIG. 1 is an explanatory diagram showing an exhaust gas treatment facility with the arrangement of apparatuses needed in the case of performing the exhaust gas purification according to the present invention.
FIG. 2 is a diagram showing an embodiment allowing the injection of NO₂ from the upper reach of a reactor 9.
FIG. 3 is an explanatory diagram showing another embodiment of the arrangement of apparatuses needed in the case of performing the exhaust gas purification according to the present invention.
FIG. 4 is an explanatory diagram showing a conventional exhaust gas treating apparatus for removing and recovering CO₂ in an exhaust gas.

### BEST MODES FOR CARRYING OUT THE INVENTION

Hereinafter, the present invention will be described in detail with reference to the drawings.
FIG. 1 is a diagram showing an exhaust gas treating facility with the arrangement of apparatuses intended to carry out the present invention. An exhaust gas coming out of a boiler 1 passes through a denitration apparatus 2, an air preheater 3, an electrostatic precipitator 4 and a desulfurization apparatus 5, and then CO₂ in the exhaust gas is removed at a CO₂ absorption column 6 in which an amine is used as an absorbent material. The exhaust gas from which CO₂ has been removed is heated to 120°C or higher by a heating apparatus 7, and is injected to a reactor 9 which is packed with the catalyst 8 of the present invention. Here, the vapor of the amines contained in the exhaust gas is brought into contact with the catalyst 8 and is subjected to oxidative decomposition, and then the exhaust gas is discharged through a smokestack 10.

The catalyst 8 used herein is a catalyst which comprises titanium oxide and an oxide of vanadium (V), or titanium oxide, an oxide of vanadium (V) and an oxide of molybdenum (Mo) or tungsten (W), and which has been mold into a honeycomb shape or a plate shape. The reaction temperature at the reactor 9 that gives satisfactory results is 130°C or higher, and preferably 150°C or higher. If a higher temperature is employed, the reaction ratio is increased, but since a higher temperature brings about deterioration of the thermal efficiency, usually a temperature of 250°C or lower provides satisfactory results. Next, the liquid which has absorbed CO₂ at the CO₂ absorption column is introduced into a CO₂ stripping column 13, releases CO₂ under heating, and then is returned to the absorption column 6.

FIG. 2 shows an arrangement in which NO₂ can be injected from the upper reach of the reactor 9 of FIG. 1, and thereby the reactor 9 can exhibit high performance at a temperature starting from low temperature.

FIG. 3 shows an arrangement in which a portion of the exhaust gas at the upper reach of the denitration apparatus 2 of FIG. 1 is pulled out, NO is oxidized into NO₂ by bringing the portion into contact with a NO oxidation catalyst 11 having a noble metal catalyst supported thereon, and then the portion of exhaust gas is injected from the upper reach of the reactor 9. Thereby, owing to the NO₂ obtained by oxidizing NO in the exhaust gas in the system, the oxidation performance of the reactor 9 can be increased, as in the case of FIG. 2.
Hereinafter, the present invention will be described in detail by way of specific examples.

### EXAMPLES

### Example 1

1.5 kg of a titanium oxide powder (specific surface area: 300 m²/g, SO₄ content: 3% by weight), 188 g of ammonium molybdate ((NH₄)₆·Mo₇O₂₄ · 4H₂O), 175 g of ammonium metavanadate (NH₄VO₃), and 226 g of oxalic acid (H₂C₂O₄ · 2H₂O) were mixed with water, and the mixture was kneaded to obtain a paste form having a water content of 34o by weight. To this, 300 g of an inorganic fiber made of silica/alumina was incorporated, and the inorganic fiber was uniformly dispersed. The paste thus obtained was placed on a metal lath substrate made of SUS430 and having a thickness of 0.2 mm, and the paste and the substrate were passed between a pair of upper and lower roller presses so that the metal lath was coated with the catalyst paste such that the through-holes were embedded into the catalyst paste, to thereby obtain a sheet having a thickness of 0.8 mm. The sheet thus obtained was air-dried and then was calcined at 500°C for 2 hours. Thus, the amine decomposition catalyst to be used in the present invention was obtained.

### Example 2

A catalyst was prepared in the same manner as in Example 1, except that the ammonium molybdate used in Example 1 was changed to 268 g of ammonium metatungstate ((NH₄)₆W₁₂O₄₀ · xH₂O, 92% by weight in terms of WO₃).

### Example 3

A catalyst was prepared in the same manner as in Example 1, except that ammonium molybdate in the Example 1 was not added.

### [Comparative Example]

A cordierite honeycomb support having a diameter of 10 cm, a cell number of 300 cells/square inch (300 cpsi) and a length of 50 cm, was subjected to an operation of immersion in a titanium dioxide sol having a TiO₂ concentration of 15% and drying, which operation was repeated three times, and then the honeycomb support was calcined at 350°C for 2 hours. Thus, a catalyst support having a TiO₂ support amount of 90 g/liter was obtained. This support was immersed in a dinitrodiammine platinum solution to have the catalyst compound supported at an amount of 2 g/liter in terms of Pt. The resultant was dried and then calcined at 600°C for 2 hours, and thus a Pt supported catalyst was obtained.

### [Experimental Example 1]

In order to evaluate the amine oxidation activity at low temperature of the catalyst to be used in the present invention, the catalysts of Examples 1 to 3 and Comparative Example were respectively subjected to 5% by weight of ethanolamine. While these catalysts were subjected to a stream of gas under the conditions indicated in Table 1, the temperature was increased at a rate of 2°C/minute. The amounts of CO₂ and CO resulting from oxidative decomposition were measured, and a comparison was made between the amounts of generation thereof.

### [Experimental Example 2]

In order to verify the influence of NO₂ on the oxidation activity, NO₂ was added to the gas of Table 1 to a concentration of 200 ppm, and the amounts of generation of CO₂ and CO were compared in the same manner as in Experimental Example 1.
The results obtained from Experimental Examples 1 and 2 are summarized in Table 2.

The catalyst of the Comparative Example having a noble metal supported thereon mostly did not exhibit an activity at a temperature between 130°C and 250°C, but the catalysts of the Examples according to the present invention were all recognized to cause the generation of CO₂+CO, which are the products of oxidation of amines, at a temperature starting from 120°C, and the catalysts exhibited very high values at 150°C. Furthermore, upon comparing the results of Examples 1 and 2, when NO₂ was made to be co-present during the treatment, the amount of generation of CO₂+CO at 150°C was increased to about two times, and thus it was found that the co-presence of NO₂ is very effective for the acceleration of oxidation activity.
As such, it can be seen that the method of the present invention is an excellent method making it possible to achieve the oxidative decomposition of amines that are used for the absorption and removal of CO₂ at a temperature starting from, for example, as low as 130°C.

**[Table 1]**

| Amount of gas | | 3 liters |
|---|---|---|
| Amount of catalyst packing | | 20 x 100-3 sheets |
| | (Comparative Example using a having the same outer surface area) | |
| Spatial velocity | | 6 m/h |
| Gas composition | Test Example 1 | |
| | | O₂ 3% |
| | | N₂ Balance |
| | Test Example 2 | |
| | | O₂ 3% |
| | | NO₂ 200 ppm |
| | | N₂ Balance |
| Rate of temperature increase | | 2 °C/min |

**[Table 2]**

| Catalyst | Reaction conditions | Amount of generation of CO₂ + CO (ppm) | | | | |
|---|---|---|---|---|---|---|
| | | 130°C | 150°C | 175°C | 200°C | 250°C |
| Example 1 | Experimental Ex. 1 | 13 | 149 | 422 | 417 | 400 |
| Example 2 | | 8 | 129 | 412 | 430 | 411 |
| Example 3 | | 3 | 95 | 308 | 360 | 390 |
| Comp. Ex. | | 2 | 27 | 31 | 93 | 120 |
| Example 1 | Experimental Ex. 2 | 20 | 216 | 483 | 490 | 412 |
| Example 2 | | 35 | 260 | 491 | 420 | 395 |
| Example 3 | | 4 | 145 | 411 | 397 | 360 |
| Comp. Ex. | | 0 | 12 | 37 | 76 | 93 |

### DESCRIPTION OF THE REFERENCE NUMERALS

- 1: BOILER
- 2: DENITRATION APPARATUS
- 3: AIR PREHEATER
- 4: ELECTROSTATIC PRECIPITATOR
- 5: DESULFURIZATION APPARATUS
- 6: CO₂ ABSORPTION COLUMN
- 7: HEATING APPARATUS
- 8: CATALYST
- 9: REACTOR
- 10: SMOKESTACK
- 11: NO OXIDATION CATALYST
- 12: NO₂ INJECTION LINE
- 13: CO₂ STRIPPING COLUMN

## Claims

1. A method of treating an exhaust gas containing carbon dioxide, the method comprising absorbing and removing CO₂ by bringing an exhaust gas containing carbon dioxide (CO₂) and nitrogen oxides, into contact with a CO₂ absorbent liquid containing amines, and then bringing the resultant into contact with a catalyst comprising titanium oxide and an oxide of vanadium (V), or titanium oxide, an oxide of vanadium (V) and an oxide of molybdenum (Mo) or tungsten (W), at a temperature of 130°C to 250°C.

2. The method of treating an exhaust gas according to claim 1, wherein after the absorbing and removing CO₂, nitrogen dioxide is injected into the exhaust gas prior to the contact with the catalyst.

3. The method of treating an exhaust gas according to claim 2, wherein the nitrogen dioxide is produced by bringing a portion of the exhaust gas containing nitrogen oxides into contact with an oxidation catalyst.
